(19) Europäisches Patentamt
European Patent Office
Office Européen des brevets

(11) Publication number: 0 222 199 B1

(12) **EUROPEAN PATENT SPECIFICATION**

(45) Date of publication of patent specification: 02.01.91 Bulletin 91/01

(51) Int. Cl.⁵: B29C 47/90, C08L 81/02

(21) Application number: 86114339.4

(22) Date of filing: 16.10.86

(54) **Tubular extruded articles and production thereof.**

(30) Priority: 17.10.85 JP 231974/85

(43) Date of publication of application: 20.05.87 Bulletin 87/21

(45) Publication of the grant of the patent: 02.01.91 Bulletin 91/01

(84) Designated Contracting States: DE FR GB

(56) References cited:
DE-A- 3 247 333
US-A- 3 939 243
US-A- 4 274 993
US-A- 4 286 018
US-A- 4 528 335

(73) Proprietor: KUREHA KAGAKU KOGYO KABUSHIKI KAISHA
9-11 Horidome-cho 1-chome Nihonbashi
Chuo-ku
Tokyo 103 (JP)

(72) Inventor: Kouyama, Toshitaka
2-12, Nakaoka-Cho 4-Chome
Iwaki-Shi Fukushima-Ken (JP)
Inventor: Fukuda, Makoto
76, Eguri 1-Chome, Nishiki-Machi
Iwaki-Shi Fukushima-ken (JP)
Inventor: Kobayashi, Akio
3-39-3, Eguri Nishiki-Machi
Iwaki-Shi Fukushima-ken (JP)
Inventor: Shiiki, Zenya
28-1, Ochiai, Nishiki-Machi
Iwaki-Shi Fukushima-ken (JP)

(74) Representative: Dr. Elisabeth Jung Dr. Jürgen Schirdewahn Dipl.-Ing. Claus Gernhardt
P.O. Box 40 14 68 Clemensstrasse 30
D-8000 München 40 (DE)

EP 0 222 199 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

### Field of the Invention

This invention relates to tubular extruded articles or heat set tubular extruded articles made from a composition comprising 30 to 100% by weight of a polyarylenethioether resin having a substantially linear structure with a melt viscosity of 2,000 to 40,000 $10^{-1}$Pa.s determined at a temperature of 310°C, and a shearing rate of 200 $sec^{-1}$, 0 to 70% by weight of an inorganic filler, and 0 to 40% by weight of a thermoplastic resin and to a process for producing the same.

### Prior Art

Polyarylenethioethers, for example, poly-p-phenylene-thioether have heat resistance even when subjected to steam sterilization and chemical resistance resistant to strong alkalis or various organic solvents, and therefore they are expected to be useful for uses in medicines, foods, and chemical plants to be used urder high temperature and corrosive environments, and otherwise for uses such as pipelines in handling of various chemicals, hot water pipelines, heat exchangers, steam pipelines, various tubes, etc., and pipelines for electrical wires for which heat resistance and flame retardancy are demanded.

However, polyarylenethioethers of the prior art have relatively low molecular weights to exhibit great fluidity and low viscosity during melting, whereby drawdown is too great to form them into tubular articles. Furthermore, it has been the practice to increase apparent melt viscosity by thermal treatment (curing) of a polyarylenethioether with short molecular chain length, thereby obtaining crosslinking/branching. However, this crosslinked polyarylenethioether, for example, the poly-p-phenylenethioether resin available in the prior art has the problems in physical properties and processing whereby mechanical strength properties (impact, flexural, tensile strength) are unsatisfactory, and the sizing step is difficult because the resin is rapidly cured during extrusion due to excessively high crystallization speed. For this reason, although composite pipes with other thermoplastic resins have been disclosed (Japanese Laid-Open Patent Publication No. 145131/1984), almost no tubular extruded articles of a polyarylenethioether alone has been practically applied.

### SUMMARY OF THE INVENTION

We have carried out investigation directed toward solving these problems and consequently developed a process for producing economically a polyarylenethioether having a high melt viscosity and a substantially linear structure (Japanese laid open Patent Application No. 7332/1986) and further developed a polyarylenethioether block copolymer having a crystallization speed suitable for extrusion (Japanese laid open Patent Application No. 14228/1986) From these results, the possibility of application of a polyarylenethioether resin for pipes or tubes has emerged.

Accordingly, as the result of detailed investigation on the forming method for the polyarylenethioethers and their compositions obtained by the methods of these inventions, it has been found that a tubular extruded article can be obtained, which has excellent mechanical strength without losing heat resistance, corrosion resistance and flame retardancy. The present invention is based on these findings.

More specifically, the polyarylenethioether tubular extruded article according to the present invention is characterized in that it is obtained by extruding a composition comprising 30 to 100% by weight of a polyarylenethioether resin having a substantially linear structure with a melt viscosity of 2,000 to 40,000 $10^{-1}$Pa.s determined at a temperature of 310°C and a shearing rate of 200 $sec^{-1}$, 0 to 70% by weight of an inorganic filler and 0 to 40% by weight of a thermoplastic resin into a tube.

The process for producing the polyarylenethioether tubular extruded article according to the present invention comprises extruding a composition comprising 30 to 100% by weight of a polyarylenethioether resin having a substantially linear structure with a melt viscosity of 2,000 to 40,000 $10^{-1}$Pa.s determined at a temperature of 310°C and a shearing rate of 200 $sec^{-1}$, 0 to 70% by weight of an inorganic filler and 0 to 40% by weight of a thermoplastic resin through a die having a ring opening, stretching the extrudate, if necessary, and subjecting the resultant tube to the sizing step.

In the present invention, since a polyarylenethioether having a considerably great molecular weight (2,000 to 40,000 $10^{-1}$Pa.s in terms of melt viscosity) and a substantially linear structure is used as the starting material, drawdown is small and also crystallization speed is adequate, whereby sizing into a tubular shape can be done without difficulty and it is also possible to form the composition easily into a tubular article. Also, the tubular article obtained is tough. For example, it is possible to obtain easily a tubular article

having an Izod strength (no notch) of 15 kg·cm/cm or more, preferably 30 kg·cm/cm based on ASTM D-256. Moreover, the article also has excellent heat resistance, chemical resistance and flame retardancy and is therefore useful widely for medicines, foods, chemical plants, etc. Further, a transparent product was obtained when the composition consisted of 100% polyarylenethioether.

## DETAILED DESCRIPTION OF THE INVENTION

### Extrusion Material

#### Base material resin

One characteristic feature of the present invention is that the resin component used for the tubular extrusion is a polymer having a polyarylenethioether $(\text{-Ar-S-})_n$ structure (Ar : arylene group) (AT polymer).

As the polyarylenethioether polymer, those having arylene groups comprising p-phenylene group or p-phenylene group as the main component are preferred in respect of heat resistance and formability. Examples of arylene groups other than p-phenylene group include m-phenylene group ( 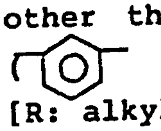 ), an alkyl-substituted phenylene group ( 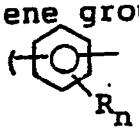 ) [R: alkyl group (preferably lower alkyl group), n is an integer of 1 to 4), p,p'-diphenylene-sulfone group ( 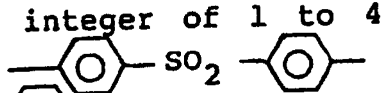 ), p,p'-biphenylene group ( 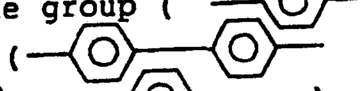 ), p,p'-diphenyleneether group ( 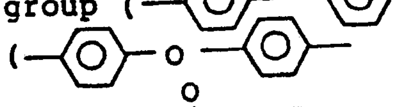 ), p,p'-diphenylenecarbonyl group ( 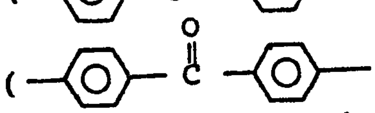 ), naphthalene group ( 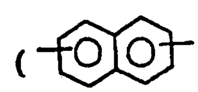 ), and others. Particularly, thioether polymers having ( 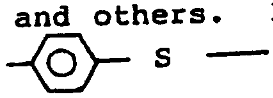 ) and ( 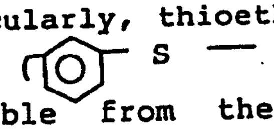 ) as the main recurring units are preferable from the standpoints of heat resistance, corrosion resistance, flame retardancy and mechanical characteristics.

Also, block copolymers containing p-phenylene groups as the main component, for example, block copolymers containing 50 mol% to 95 mol% of the recurring units ( 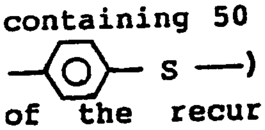 ) having p-phenylene groups and 5 to 50 mol% of the recurring units having m-phenylene groups in blocks in the chain (as disclosed in Japanese Laid-Open Patent Publication No.14228/1986) are particularly preferred because they have moderate crystallization speed suitable for extrusion processing of the present invention and therefore are easily extruded into tubular articles. Yet their heat resistance, chemical resistance, flame resistance and mechanical properties are substantially the same as the product obtained by the use of a polyphenylenethioether straight polymer. These polyarylenethioethers can be used either singly or as a mixture.

The resin to be used as the base material resin for the tubular composition of the present invention has the chemical structure described above and is a substantially linear polyarylenethioether with a melt viscosity of 2,000 to 40,000 $10^{-1}$Pa.s [temperature = 310°C, shearing rate = 200 $sec^{-1}$], particularly preferably 3,000 to 20,000 poise. With a polymer having a low melt viscosity less than 2,000 $10^{-1}$Pa.s drawdown is too great during melt processing, whereby forming is difficult. On the other hand, with a polymer having a high melt viscosity in excess of 40,000 $10^{-1}$Pa.s the flow characteristic becomes poor to make forming difficult.

The polyarylenethioether to be used in the present invention is required to have a substantially linear structure. Therefore the polymer in this invention is to be a high molecular weight linear polymer of a melt viscosity of 2,000 + 40,000 $10^{-1}$Pa.s bas polymerized.

For example, a crosslinked product obtained by use of 0.5 mols or more of a crosslinking agent (e.g. 1,2,4-trihalobenzene) per 100 mols of arylene groups during polymerization or a crosslinked product increased in melt viscosity by 2-fold or more in appearance by crosslinking the polymer by high temperature treatment in the presence of $O_2$, etc., is not usable for the present invention. These crosslinked products will give generally extruded articles which are mechanically very fragile. Particularly a polyarylenethioether crosslinked by heat treatment is subjected to sufficient sizing in tubular form with difficulty due to too great crystallization speed and therefore it is not also usable in processability. Besides, the crosslinked product increased in viscosity by high temperature treatment also has the drawbacks of excessive coloration, liability to contain voids, and also remarkably inferiority in transparency and coloration characteristic.

A linear polyarylenethioether satisfying the conditions of the resin of the present invention as described above can be produced economically according to the method as described in, for example, the Japanese laid open Patent Application No.7332/1986 by the present inventors. The process of the Japanese laid open Patent Application No. 7332/1986 is a process for producing a polyarylenesulfide having a melt viscosity of 1,000 $10^{-1}$ Pa.s or higher (melt viscosity is measured at 310°C and at a shearing rate of 200 $sec^{-1}$), which comprises carrying out the reaction between an alkali metal sulfide and a dihaloaromatic compound in an organic amide solvent, to obtain a polyarylenesulfide, wherein the reaction is carried out in at least the following two steps :

(1) the step of carrying out the reaction at a temperature of 180 to 235°C under the state in which 0.5 to 2.4 mols of water is present per one mol of the alkali metal sulfide to form a polyarylenesulfide having a melt viscosity of 5 to 300 $10^{-1}$Pa.s at a conversion of the dihaloaromatic compound of 50 to 98 mol%, and,

(2) the step of continuing the above reaction by adding water so that 2.5 to 7.0 mols of water will be present per 1 mol of the alkali metal sulfide and also elevating the temperature to 245 to 290°C.

## Inorganic filler

The polyarylenethioether as described above can be used also as it is, but it is possible to incorporate an inorganic filler into the above base material resin if desired for the purpose of improving physical properties such as dimensional stability, heat distortion temperature, flame retardancy, mechanical strength, hardness, etc., or for the purpose of reducing the cost, within limits which will not bring about inconveniences in forming.

Inorganic fillers can be classified roughly into powdery or particulate fillers and fibrous fillers. The former fillers are generally cheap in cost, while the latter have the advantage of greater effect of improvement of physical properties, although they are higher in cost.

Examples of such powdery or fine particulate fillers include calcium carbonate, calcium silicate, calcium sulfate, talc, silica, mica, titanium oxide, carbon or graphite, alumina, silica alumina, clay, glass, red iron oxide, gypsum, sand, cement and various metal powders and fine particles. On the other hand, examples of fibrous fillers include fibers or whiskers of glass, carbon or graphite, potassium titanate, silica, and wallastonite.

The amount of the filler incorporated is 0 to 70 wt.%, preferably 0 to 60 wt.%. An amount of more than 70 wt.% is not desirable because it becomes difficult to melt process the composition. A typical example of the present invention is one wherein the content of the filler is substantially 0.

## Thermoplastic resin

Within limits which will not bring about inconveniences in extrusion working, it is possible to use another thermoplastic resin blended in the composition. A polyarylenethioether with a different chemical structure can be used in combination as described above. A thermoplastic resin is incorporated for the purpose of improving physical properties such as lubricity, heat distortion temperature, weathering resistance, and

impact resistance, or for the purpose of reducing the cost.

A resin which can be incorporated should desirably be one which will not be decomposed or denatured at the melt processing temperature (generally within the range of from 200 to 380°C). Examples of such resins are polyamide, polyether ether ketone, polysulfone, polyether sulfone, polyphenyleneether, polycarbonate, polyalkyleneterephthalate (e.g., polyethyleneterephthalate and polybutyleneterephthalate), polyolefins (e.g., polyethylene and polypropylene), ABS, polystyrene and fluorine resins such as polyvinylidene fluoride, polytetrafluoroethylene, and tetrafluoroethylene copolymer. These thermoplastic resins are incorporated in an amount of 0 to 40 wt.%, preferably 0 to 30 wt.%. An amount over 40% is not desirable because the characteristics (physical properties such as heat resistance and corrosion resistance) of the tubular product may be greatly changed. A typical example of the present invention is one wherein the content of these thermoplastic resins is substantially zero.

Other additives

For various purposes such as improvement of color tone, improvement of heat stability, prevention of rust, imparting of lubricity, and control of crystallization speed and coloration, it is also possible to, add additives such as salts, hydroxides, oxides or hydrocarbyl oxides of alkali metals, alkaline earth metals, stabilizers, lubricants, mold release agents, and pigments.

When it is difficult to extrude the starting powdery mixture as described above into a tubular article with stable condition, it is possible and preferable to subject the composition to pelletizing before melt extrusion into a tubular article.

Forming

For preparation of a tubular extrusion it is essentially required to pass the composition satisfying the requirements as described above through the basic steps of (1) extruding the heated and melted composition through a die having a ring opening, (2) sizing into a tube (sizing step) and (3) taking up and cutting.

(1) The step of extruding the composition of the present invention melted by heating through a die having a ring opening comprises feeding pellets of the composition of the present invention or sometimes the composition powder through a hopper into an extruder provided with a straight die, bent die or crosshead die having a ring opening, melting the composition within the cylinder by heating to a temperature not lower than its melting point, and extruding the melted composition through the ring opening of the die by rotation of a screw.

Fibrous inorganic fillers such as those in the shape of roving can be also fed into the cylinder through a vent of the extruder.

(2) Sizing step

The sizing is an important step in the forming of a tube.

For sizing of the composition of the present invention, it is preferable to use the following four methods as described in "Extrusion Forming" supervised by Kenkichi Murakami, sixth edition (1963), P. 276 ~279, published by Plastic Age K.K., namely (i) the outside mandrel method, (ii) the inside mandrel method, (iii) the plate sizing method, and (iv) the vacuum sizing method. The contents of these methods are as described below.

(i) The outside mandrel method

With the use of a device in which, to a die having a ring opening a mandrel with a slightly greater bore diameter than the die is connected, the molten composition is extruded into a tube through the ring opening, and the tube is permitted to pass through the mandrel while being pressed against the mandrel inner wall surface by expanding the tube in the radius vector direction with application of an inner pressure internally of said tube. Thereafter the tube is solidified by cooling from the outer surface with water or air, whereby a tubular article regulated in outer diameter is made.

According to this method, the operation of sealing the pipe tip end is required, but a tubular article having excellent strength can be easily obtained.

(ii) The inside mandrel method

With the use of a device in which, to a die having a ring opening a mandrel with a slightly greater bore diameter than the die is connected, the molten composition is extruded into a tube through the ring opening, and the tube is permitted to pass along the outer surface of the mandrel and taken up while being solidified by cooling from the outer or inner surface with water or air, whereby a tubular article regulated in inner diameter is made from the composition of the present invention.

(iii) The plate sizing method

The molten composition is extruded into a tube through a ring opening of a die, then passed through two or more sizing plates with holes having gradually decreasing inner diameters, through the holes along the inner wall surfaces thereof, and taken up while being solidified by cooling from the outer surface with water or air, whereby a tubular article regulated in outer diameter is made from the composition of the present invention.

(iv) The vacuum sizing method

By the use of a vacuum forming die having an inner diameter which is substantially the same as the outer diameter of the product, the molten composition is extruded into a tube through the die of an extruder having a ring opening then immediately fed into a vacuum sizing device (e.g., vacuum forming die). The tubular product is passed through the forming die by sucking it against the inner wall surface of the die by the use of vacuum and is taken up while being solidified by cooling from the outer surface with water or air, whereby a tubular article regulated in outer diameter is made from the composition of the present invention.

(3) Taking-up and cutting step

The tubular article subjected to sizing can be withdrawn by the use of a caterpillar, friction roller, etc. Cutting is the step of cutting to a desired length, and a cutter, an automatic saw, etc., can be used. In the production of such a tubular article, stretching to about 0 to 10% in the radius vector direction can be carried out to the extent that no orientation will occur in the sizing and withdrawing steps. Also, in addition to the three basic steps as described above, the crystallization step or the heat setting step can be added before or after the taking-up and cutting step, if necessary.

Heat setting can be conducted by, for example, holding the tubular article obtained at a temperature of 150 to 260°C for 0.3 to 100 hours, particularly preferably 1 to 20 hours. A temperature lower than 150°C is disadvantageous in productivity because a long time is required for heat setting, while a temperature over 260°C is not desirable because the resin may be melted. A time shorter than 0.3 hours is insufficient for heat setting, while a time over 100 hours is disadvantageous in productivity.

Other processing

When using practically a tubular product such as a pipe or a tube, bonding mutually between other tubular products or with an elbow, socket, cheese, valve, etc., becomes a problem.

For making these bondings easier, it is convenient to make one end or both ends of the tubular product in the shape of a taper or a flange.

A tubular product having a tapered end can be made easily by softening the end by heating it to a temperature not lower than the secondary transition point and not higher than the melting point of the composition and pressing a tapered mold made of a metal thereagainst. Also, after processing, crystallization treatment (thermal fixing), etc., can also be conducted, if necessary.

A tubular product having an end in the shape of a flange can be prepared by making previously a short flange tube of the same composition according to the injection molding method, etc., and connecting the end of the tubular product with the end of said short flange tube by heat welding, for example. After processing, heat setting treatment can be conducted, if necessary.

Tubular Article

The tubular article according to the present invention has excellent heat resistance, toughness, and chemical resistance. Also, when the composition consists of 100% arylenethioether, there is the great

advantage that also a transparent product can be made. The tubular molding of the present invention is capable of being boiled or steam sterilized and also has transparency. Hence it can be used for uses in medicines, chemical plants and foods, pipelines, hot water pipelines, heat exchangers, steam pipelines, etc. Alternatively, it is useful for pipelines for electrical wires for which not only heat resistance but also flame retardancy are demanded. Further, due to its excellent chemical resistance, it is useful as pipes or tubes to be used in an atmosphere of strong acid, strong alkali or organic solvent.

## EXPERIMENTAL EXAMPLES

### Synthesis Example 1

A titanium-lined pressure polymerization vessel (abbreviated as autoclave) was charged with 1,400 kg of N-methylpyrrolidone (abbreviated as NMP), 1.5 Kmols of $Na_2S{\cdot}3H_2O$, and 3 Kmols of CaO to carry out the reaction for eliminating crystal water with CaO by heating at 155°C for 2 hours, then charged with 100 kg of NMP and 1.5 Kmols of p-dichlorobenzene (abbreviated as p-DCB), and polymerization was carried out at 200°C for 8 hours to obtain a poly-p-phenylenethioether $S_1$. The melt viscosity of this $S_1$ (temperature = 310°C, shearing rate = 200 $sec^{-1}$) was found to be 330 $10^{-1}$Pa.s.

A mixture of 16.2 kg of $S_1$, 180 kg of NMP and 30 kg of water was stirred in an autoclave, and further 300 g of NaOH was charged into the autoclave and the reaction was carried out at 265°C for 4 hours to obtain a poly-p- phenylenethioether $S_2$. The melt viscosity of this $S_2$ was found to be 12,000 $10^{-1}$Pa.s.

According to the method in the preparation of $S_2$ except for the use of 500 g of sodium ethylate in place of 300 g of NaOH, a poly-p-phenylenethioether $S_3$ was obtained. The melt viscosity of $S_3$ was found to be 28,000 $10^{-1}$Pa.s.

A part (20 kg) of $S_1$ was subjected to heat treatment in a hot air dryer at 260°C for 4 hours to obtain a crosslinked poly-p-phenylenethioether $C_1$. The melt viscosity of this $C_1$ was found to be 5,500 $10^{-1}$Pa.s.

### Synthesis Example 2

An autoclave was charged with 110 kg of NMP and 250 mols of $Na_2S{\cdot}5H_2O$ and the temperature was elevated to about 205°C to distill out about 7/10 of crystal water, and then 30 kg of NMP and 250 mols of p-DCB were added to the mixture to carry out polymerization at 225°C for 3 hours. Subsequently, 600 mols of water were added and the temperature was elevated to 260°C to carry out polymerization for 5 hours to give a poly-p-phenylenethioether $S_4$. The melt viscosity of $S_4$ was found to be 5,400 $10^{-1}$Pa.s.

### Synthesis Example 3

Polymerization was carried out as in Synthesis Example 2 except that polymerization was carried out at a temperature of 260°C for 15 hours by the use of 210 mols of p-DCB and 40 mols of m-dichlorobenzene (abbreviated as m-DCB) in place of 250 mols of p-DCB to obtain a random copolymer of (p-phenylenethioether/m-phenylenethioether) $R_1$. The melt viscosity of this $R_1$ obtained was found to be 3,200 $10^{-1}$Pa.s and the composition ratio of (p-phenylenethioether/m-phenylenethioether) to be (88 mols/12 mols).

### Synthesis Example 4

An autoclave was charged with 110 kg of NMP and 200 mols of $Na_2S{\cdot}5H_2O$, and the temperature therein was elevated to 200°C to distill out crystal water. Subsequently, 30 kg of NMP and 200 mols of m-DCB were charged, and polymerization was carried out at 230°C for 10 hours to prepare a reaction mixture A. On the other hand, another autoclave was charged with 623 kg of NMP and 1.12 Kmols of $Na_2S{\cdot}5H_2O$, and about 7/10 of the crystal water was distilled out by elevating the mixture to about 200°C. To this mixture was charged the above reaction mixture A, 170 kg of NMP and 1.12 K moles of p-DCB, and then polymerization was carried out at 220°C for 10 hrs., after which 170 kg of NMP 1.12 Kmols of p-DCB and 3.55 Kmols of watrer were further charged, and polymerization was carried out at 255°C for 8 hours to obtain $B_1$. The melt viscosity of the block copolymer of (p-phenylenethioether/m-phenylenethioether) $B_1$ was found to be 5,100 $10^{-1}$Pa.s and the composition ratio of (p-phenylenethioether/m-phenylenethioether) to be (84 mols/16 mols).

Example of preparation of composition pellet

For the 7 kinds of polyarylenethioethers prepared as described above, compositions for use in pipe molding were prepared, and further pellets were prepared therefrom.

First, to each of the polymers $S_1$, $S_2$, $S_3$, $S_4$, $C_1$, $R_1$ and $B_1$ 30 wt.% of glass fibers [CSO3JA 404 produced by Asahi Fiber Glass K.K.], 1 wt.% of calcium oleate and 0.2 wt.% of sodium ethylate were added, and the respective pellets ($S_1$–1), ($S_2$–1), ($S_3$–1), ($S_4$–1), ($C_1$–1), ($R_1$–1) and ($B_1$–1) were prepared by means of a single screw pelletizer.

On the other hand, to the polymer $B_1$ were added 30 wt.% of glass fibers, 2 wt.% of powdery silica, 2 wt.% of titanium oxide powder, 2 wt.% of mica and 0.5 wt.% of barium hydroxide crystals to prepare pellets ($B_1$–2). Also, to the polymer $B_1$ were added 30 wt.% of glass fibers, 3 wt.% of calcium carbonate, 2 wt.% of talc, 0.4 wt.% of sodium ethylate to prepare pellets ($B_1$–3). Further, to the polymer $B_1$ were added 20 wt.% of carbon fibers [Kurekachop, produced by Kureha Kagaku K.K.], 1 wt.% of carbon black powder, 10 wt.% of polybutylene terephthalate, 1 wt.% of potassium titanate whisker, 2 wt.% of calcium silicate and 2 wt.% of quick lime to prepare pellets ($B_1$–4).

Also to the polymer $B_1$, polymer $C_1$ and polymer $S_4$ were respectively added 2 wt.% of barium stearate powder to prepare pellets ($B_1$–5), ($C_1$–5) and ($S_4$–5), respectively.

These pellets were all dried at 140°C for 3 hours to remove water and volatiles before use. The resin temperature was caused to be 300 ~320°C when entering the die, and about 310°C at the die outlet.

Examples 1 ~7 and Comparative Examples 1 ~3

An outside mandrel was connected with the die of a small-scale single screw extruder (35 mm Φ), and the pellets ($S_1$–1), ($S_2$–1), ($S_3$–1), ($S_4$–1), ($C_1$–1), ($R_1$–1), ($B_1$–1), ($B_1$–5) and ($S_4$–5) were respectively extruded through the extruder set at a cylinder temperature of 250 ~ 330°C under the condition of screw rotational speed of 10 ~30 rpm, subjected to sizing while being expanded by 3% in the machine direction and cooled with water to form pipes P($S_1$–1), P($S_2$–1), P($S_3$–1), P($S_4$–1), P($C_1$–1), P($R_1$— 1), P($B_1$–1), P($B_1$–5) and P($S_4$–1), respectively. After forming, the pipes were held at 220°C for 4 hours.

Each of the pipes obtained was found to be a pipe with smooth inner surface having an inner diameter of 20 mm and a wall thickness of 3 mm. However, forming of the base material resin of the low molecular weight $S_1$ into a pipe was difficult due to excessive drawdown during melt forming (Comparative Example 1).

These pipes were heat set at 205°C for 4 hours and conveniently cut out into rectangular shapes of 60 mm x 12.7 mm x 3 mm for measurement of heat distortion temperature according to the Vikat method (ASTM D-1525).

Next, rectangular samples of 60 mm x 12.7 mm x 3 mm were cut out from the pipe for an expedient measurement of Izod impact strength (ASTM D-256).

These results are summarized in Table 1. Only very fragile products could be obtained from the base material resin of the crosslinked polymer ($C_1$) (Comparative Examples 2 and 3). Those obtained from the homopolymers ($S_2$, $S_3$, $S_4$) and the block copolymer ($B_1$) as the base material resin were found to have excellent strength. The product obtained from the amorphous random copolymer $R_1$ as the base material resin was found to be slightly lower in heat distortion temperature with the same composition as compared with those obtained from the base material resin of homopolymers or block copolymer.

Table 1

| | Pipe No. | Izod Strength No Notch (kg cm/cm) | Vikat Heat Distor- tion Temp. (°C) | Remarks |
|---|---|---|---|---|
| Comparative Example 1 | $P(S_1\text{-}1)$ | - | - | Difficult to form |
| Example 1 | $P(S_2\text{-}1)$ | 35 | 240 ~ 250 | |
| Example 2 | $P(S_3\text{-}1)$ | 37 | 240 ~ 250 | |
| Example 3 | $P(S_4\text{-}1)$ | 39 | 240 ~ 250 | |
| Comparative Example 2 | $P(C_1\text{-}1)$ | 13 | 240 ~ 250 | |
| Example 4 | $P(R_1\text{-}1)$ | 36 | 180 ~ 190 | |
| Example 5 | $P(B_1\text{-}1)$ | 43 | 240 ~ 250 | |
| Example 6 | $P(B_1\text{-}5)$ | 240 | 89 ~ 94 | |
| Example 7 | $P(S_4\text{-}5)$ | 140 | 90 ~ 95 | |
| Comparative Example 3 | $P(C_1\text{-}5)$ | 10 | 91 ~ 96 | |

Example 8

The pellet ($B_1$–2) was extruded through a single screw extruder equipped with a die connected with a sizing die (the outside method), and the pipe was sized while being expanded by 8% in the radius vector direction, the tip end of the pipe being sealed and $N_2$ being introduced under pressure into the pipe, solidified by cooling with water, and taken up by a caterpillar type withdrawing machine to form a pipe P($B_1$–2). The pipe obtained was found to be a pipe with smooth outer surface and substantially uniform section having an inner diameter of 20 mm and a wall thickness of 3 mm. After heat setting at 220°C for 4 hours, the Izod strength was found to be 31 kg cm/cm, and the Vikat heat distortion temperature 248°C.

Example 9

The pellet ($B_1$–3) was extruded through a single screw extruder having a die connected with a mandrel (the inside mandrel method), and the extrudate was sized while being expanded by 3% in the radius vector direction, and cooled with water to form a pipe P($B_1$–3). The pipe obtained was found to be a tough pipe with smooth inner surface and substantially uniform section having an inner diameter of 20 mm and a wall thickness of 3 mm. After heat setting at 220°C for 4 hours, the Izod strength was found to be 33 kg cm/cm, and the Vikat heat distortion temperature 249°C.

Example 10

The pellet ($B_1$–4) was extruded through a single screw extruder, and the extrudate was sized while being stretched in the machine direction by use of 5 sheets of sizing plates (plate sizing method), and solidified by cooling with water to form a pipe P($B_1$–4). The pipe obtained was a tough pipe with smooth outer surface and substantially uniform section having an outer diameter of 26 mm and a wall thickness of 3 mm. After heat setting at 220°C for 4 hours, the Izod strength of the pipe was found to be 34 kg cm/cm, and the Vikat heat distortion temperature 250°C.

Example 11

The pellet ($B_1$–5) was extruded through a single screw extruder, and the extrudate was sized while being stretched by about 3% in the radius vector direction by means of a vacuum forming die (the vacuum sizing method), and solidified by cooling with water to form a pipe P($B_1$-5). The pipe obtained was a tough pipe with smooth outer surface and substantially uniform section having an outer diameter of 26 mm and a wall thickness of 3 mm. After heat setting at 220°C for 4 hours, the Izod strength of the pipe was found to be 36 kg cm/cm, and the Vikat heat distortion temperature 250°C.

## Claims

1. A tubular extruded article of polyarylenethioether, comprising a composition comprising 30 to 100% by weight of a polyarylenethioether resin having a substantially linear structure with a melt viscosity of 2,000 to 40,000 $10^{-1}$Pa.s determined at a temperature of 310°C and a shearing rate of 200 $sec^{-1}$, 0 to 70% by weight of an inorganic filler, and 0 to 40% by weight of a thermoplastic resin, which composition has been extruded into a tube.

2. A tubular extruded article of polyarylenethioether according to claim 1, which has been heat set by heating at 150 to 260°C for 0.3 to 100 hours.

3. A tubular extruded article of polyarylenethioether according to claim 1 or claim 2, wherein the polyarylenethioether resin is substantially a linear poly-p-phenylenethioether.

4. A tubular extruded article of polyarylenethioether according to claim 1 or claim 2, wherein the polyarylenethioether resin is a block copolymer comprising 50 to 95 mol% of recurring units ( 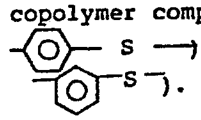 and 5 to 50 mol% of recurring units ( ).

5. A tubular extruded article of polyarylenethioether according to claim 1, wherein the content of said thermoplastic resin is substantially 0.

6. A tubular extruded article of polyarylenethioether according to claim 1, wherein the content of said thermoplastic resin is substantially 0 and the content of said inorganic filler is substantially 0.

7. A tubular extruded article of polyarylenethioether according to any one of claims 1 to 6, wherein the inorganic filler is a powder or fine particles of calcium carbonate, calcium silicate, silica, alumina, talc, mica, titanium oxide, silica alumina, kaolin, glass, red iron oxide, gypsum, sand, metal, carbon or graphite, or a fibrous filler including a fiber or a whisker of wollastonite, glass, carbon, graphite or potassium titanate.

8. A tubular extruded article of polyarylenethioether according to any one of claims 1 to 7, wherein the thermoplastic resin is polyamide, polyether ether ketone, polysulfone, polyether sulfone, polyphenyleneether, polycarbonate, polyalkyleneterephthalate, Polyolefin, ABS, polyvinylidenefluoride, polytetrafluoroethylene or tetrafluoroethylene copolymer.

9. A tubular extruded article of polyarylenethioether according to any one of claims 1 to 8, wherein the tubular extruded article is processed into the shape of a taper or a flange at one end or both ends thereof.

10. A process for producing a tubular extruded article of polyarylenethioether, which comprises melting a composition comprising 30 to 100 by weight of a polyarylenethioether resin having a substantially linear structure with a melt viscosity of 2,000 to 40,000 $10^{-1}$Pa.s determined at a temperature of 310°C and a shearing rate of 200 $sec^{-1}$, 0 to 70% by weight of an inorganic filler and 0 to 40% by weight of a thermoplastic resin, extruding the molten composition into a tube through a die having a ring opening, subjecting the extrudate to sizing step, and thereafter taking up and cutting the product.

11. A process for producing a tubular extruded article of polyarylenethioether according to claim 10, wherein the sizing step is the step of cooling and solidifying the tubular product melt extruded through the die having a ring-shaped opening by passing said product through a sizing device while pressing the product against the inner wall surface thereof under an inner pressure applied thereon.

12. A process for producing a tubular extruded article of polyarylenethioether according to claim 10, wherein the sizing step is the step of cooling and solidifying the tubular product melt extruded through the die having a ring-shaped opening along the outside of an inner mandrel connected with the die.

13. A process for producing a tubular extruded article of polyarylenethioether according to claim 10, wherein the sizing step is the step of cooling and solidifying the tubular product melt extruded through the die having a ring-shaped opening through a series of 2 or more sizing plates provided with such circular holes that the holes of the sizing plates become gradually smaller in diameter in the direction the extruded pipe is passed).

14. A process for producing a tubular extruded article of polyarylenethioether according to claim 10, wherein the sizing step is the step of cooling and solidifying the tubular product melt extruded through the die having a ring-shaped opening while pressing its against the inner surface of a vacuum sizing device under vacuum aspiration.

15. A process for producing a tubular extruded article of polyarylenethioether according to claim 10, wherein the content of said thermoplastic resin is substantially 0.

16. A process for producing a tubular extruded article of polyarylenethioether according to claim 10, wherein the content of said thermoplastic resin is substantially 0 and the content of said inorganic filler is substantially 0.

17. A tubular extruded article of polyarylenethioether as claimed in any one of claims 1 to 9 which has an Izod strength (no notches) according to ASTM D-256 of at least 15 kg·cm/cm.

18. A tubular extruded article of polyarylenethioether as claimed in claim 17 which has an Izod strength (no notches) according to ASTM D-256 of at least 30 kg·cm/cm.

**Ansprüche**

1. Ein röhrenförmiger extrudierter Gegenstand aus polyarylenthioäther, umfassend eine Zusammensetzung mit 30 bis 100 Gewichtsprozent eines Polyarylenthioätherharzes von im wesentlichen linearer Struktur mit einer Schmelzviskosität von 2000 bis 40000 $10^{-1}$Pa.s, welche bei einer Temperatur von 310°C und einer Schergeschwindigkeit von 200 $sec^{-1}$ gemessen wurde, 0 bis 70 Gewichtsprozent eines anorganischen Füllstoffes, und 0 bis 45 Gewichtsprozent eines thermoplastischen Harzes, welche Zusammensetzung zu einem Rohr extrudiert worden ist.

2. Ein röhrenförmiger extrudierter Gegenstand aus polyarylenthioäther nach Anspruch 1, welcher durch Erhitzen bei 150 bis 260°C über 0,3 bis 100 Stunden wärmegehärtet worden ist.

3. Ein röhrenförmiger extrudierter Gegenstand aus polyarylenthioäther nach anspruch 1 oder 2 bei welchem das Polyarylenthioätherharz im wesentlichen ein linearer Poly-p-phenylenthioäther ist.

4. Ein röhrenförmiger extrudierter Gegenstand aus Polyarylenthioäther nach Anspruch 1 oder 2, bei welchem das polyarylenthioätherharz ein Block-Mischpolymerisat ist, umfassend 50 bis 95 Molprozent der wiederkehrenden Einheiten

( 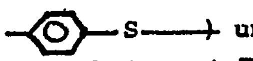 und 5 bis 50 Molprozent der wiederkehrengen Einheiten ( 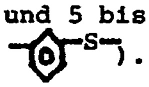 ).

5. Ein röhrenförmiger extrudierter Gegenstand aus Polyarylenthioäther nach Anspruch 1, bei welchem der Gehalt an dem genannten thermoplastischen Harz im wesentlichen 0 ist.

6. Ein röhrenförmiger extrudierter Gegenstand aus polyarylenthioäther nach Anspruch 1, bei welchem der Gehalt an dem genannten thermoplastischen Harz im wesentlichen 0 ist und der Gehalt an dem genannten anorganischen Füllstoff im wesentlichen 0 ist.

7. Ein röhrenförmiger extrudierter Gegenstand aus Polyarylenthioäther nach einem der Ansprüche 1 bis 6, bei welchem der anorganische Füllstoff aus einem pulver oder aus feinen Teilchen von Calciumcarbonat, Calciumsilikat, Siliciumdioxid, aluminiumoxid, Talkum, Glimmer, Titanoxid, Siliciumdioxid-aluminiumoxid, Kaolin, Glas, rotem Eisenoxid, Gips, Sand, Metall, Kohlenstoff oder Graphit besteht, oder ein faserartiger Füllstoff ist, umfassend eine Faser oder einen Whisker aus Wollastonit, Glas, Kohlenstoff, Graphit, oder Kaliumtitanat.

8. Ein röhrenförmiger extrudierter Gegenstand aus Polyarylenthioäther nach einem der Ansprüche 1 bis 7; bei welchem das thermoplastische Harz polyamid, Polyätherätherketon, Polysulfon, Polyäthersulfon, Polyphenylenäther, Polycarbonat, Polyalkylenterephthalat, Polyolefin, ABS, polyvinylidenfluorid, Polytetrafluoräthylen oder Tetrafluoräthylenmischpolymer ist.

9. Ein röhrenförmiger extrudierter Gegenstand aus Polyarylenthioäther nach einem der Ansprüche 1 bis 8, bei welchem der röhnenförmige extrudierte Gegenstand an einem oder an beiden Enden zu einem Flansch oder konisch zulaufend geformt ist.

10. Ein Verfahren zur Herstellung eines röhrenförmigen extrudierten Gegenstandes aus Polyarylenthioäther, welches das Schlmelzen einer Zusammensetzung, umfassend 30 bis 100 Gewichtsprozent eines Polyarylenthioätherharzes mit einer im wesentlichen linearen Struktur mit einer Schelzviskosität von 2000 bis 40000 $10^{-1}$ Pa.s, welche bein einer Temperatur von 310°C und einer Schergeschwindigkeint von 200 $sec^{-1}$ gemesen wurde, 0 bis 70 Gewichtsprozent eines anorganischen Füllstoffes und 0 bis 40 Gewitchtsprozent eines thermoplastischen Harzes, das Extrudieren der geschmolzenen Zusammensetzung zu einer Röhre durch eine Düse mit einer Ringöffnung, das Unterwerfen des Extrudats einer Kalibrierstufe, und anschließen das Aufnehmen und Schneiden des Produkts umfaßt.

11. Ein Verfahren zur Herstellung eines röhrenförmigen extrudierten Gegenstands aus Polyarylenthioäther nach Anspruch 10, in welchem die Kalibrierstufe die Stufe des Abkühlens und Verfestigens und Verfestigens des rörenförmigen, durch die Düse mit einer ringförmigen schmelzextrudierten Produkts ist, durch Leiten des genannten Produkts durch eine Kalibriervorrichtung, während das Produkt gegen die Innenwandoberfläche derselben unter einem darauf ausgeübten Innendruck gepreßt wird.

12. Ein Verfahren zur Herstellung eines röhrenförmigen extrudierten Gegenstands aus Polyarylenthioäther nach Anspruch 10, in welchem die Kalibrierstufe die Stufe des Abkühlens und Verfestigens des rörenförmigen, durch die Düse mit einer ringförmigen Öffnung längs der Außenseite eines inneren, mit der Düse verbundenen Spritzdornes schmelzextrudierten Produkts ist.

13. Ein Verfahren zur Herstellung eines röhrenförmigen extrudierten Gegenstands aus Polyarylenthioäther nach Anspruch 10, in welchem die Kalibrierstufe die Stufe des Abkühlens und Verfestigens des röhrenförmigen, durch die Düse mit einer ringförmigen Öffnung und durch eine Reihe von zwei oder mehreren Kalibrierplatten schmelzextrudierten produkts ist, welche Kalibrierplatten mit solchen kreisförmigen Löchern versehen sind, daß die Durchmesser der Löcher der Kalibrierplatten in der Richtung, in welcher das extrudierte Rohr geführt wird, zunehmend kleiner werden.

14. Ein Verfahren zur Herstellung eines röhrenförmigen extrudierten Gegenstands aus Polyarylenthioäther nach Anspruch 10, in welchem die Kalibrierstufe die Stufe des Abkühlens und Verfestigens des röhrenförmigen durch die Düse mit einer ringförmigen Öffnung schmelzextrudierten produkts ist, wobei das produkt gegen die Innenfläche einer Vakuum-Kalibriervorrichtung unter Vakuumansaugung gepreBt wird.

15. Ein Verfahren zur Herstellung eines röhrenförmigen extrudierten Gegenstands aus polyarylenthioäther nach Anspruch 10, in welchem der Gehalt an dem genannten thermoplastischen Harz im wesentlichen 0 ist.

16. Ein Verfahren zur Herstellung eines röhrenförmigen extrudierten aus Polyarylenthioäther nach Anspruch 10, in welchem der Gehalt an dem genannten thermoplastischen Harz und der Gehalt an dem genannten anorganischen Füllstoff 0 ist.

17. Ein röhrenförmiger extrudierter Gegenstand aus Polyarylenthioäther wie in einem der Ansprüche 1 bis 9 beansprucht, welcher eine Kerbschlagzähigkeit nach Izod gemäß ASTM D 256 von mindestens 15 kg.cm/cm aufweist.

18. Ein röhrenförmiger extrudierter Gegenstand aus Polyarylenthioäther wie in Anspruch 17 beansprucht, welcher eine Kerbschlagzähigkeit nach Izod gemäß ASTM D-256 von mindestens 30 kg.cm/cm aufweist.

**Revendications**

1. Article tubulaire extrudé en thioéther de polyarylène, comportant une composition comportant de 10 à 100 % en poids d'une résine de thioéther de polyarylène ayant une structure essentiellement linéaire avec une viscosité à l'état fondu de 2000 à 40000 $10^{-1}$ Pa.s, déterminée à une température de 310°C et un taux de cisaillement de 200 $sec^{-1}$, de 0 à 70% en poids d'une charge minérale, et de 0 à 40 % en poids d'une résine thermoplastique, ladite composition ayant été extrudée sous forme d'un tube.

2. Article tubulaire extrudé en thioéther de polyarylène selon la revendication 1, qui a subi un traitement de stabilisation thermique par chauffage à 150-260°C pendant de 0,3 à 100 heures.

3. Article tubulaire extrudé en thioéther de polyarylène selon la revendication 1 ou la revendication 2,

dans lequel la résine en thioéther de polyarylène est essentiellement un thioéther de poly-p-phénylène linéaire

4. Article tubulaire extrudé en thioéther de polyarylène selon la revendication 1 ou la revendication 2, dans lequel la résine de thioéther de polyarylène est un copolymère séquencé comportant de 50 à 95 moles % d'unités

récurrentes ( 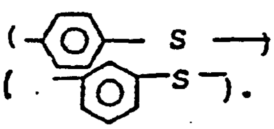 et de 5 à 50 moles % d'unités récurrentes (

5. Article tubulaire extrudé en thioéther de polyarylène selon la revendication 1, dans lequel la teneur en ladite résine thermoplastique est essentiellement 0.

6. Article tubulaire extrudé en thioéther de polyarylène selon la revendication 1, dans lequel la teneur en ladite résine thermoplastique est essentiellement 0 et la teneur en ladite charge minérale est essentiellement 0.

7. Article tubulaire extrudé en thioéther de polyarylène selon l'une quelconque des revendications 1 à 6, dans lequel la charge minérale est une poudre de fines particules de carbonate de calcium, de silicate de calcium, de silice, d'alumine, de talc, de mica, d'oxyde de titane, de silice alumine, de kaolin, de verre, d'oxyde ferrique, de gypse, de sable, de métal, de carbone ou de graphite, ou une charge fibreuse y compris une fibre ou une barbe (whisker) de wollastonite, de verre, de carbone, de graphite ou de titanate de potassium.

8. Article tubulaire extrudé en thioéther de polyarylène selon l'une quelconque des revendications 1 à 7, dans lequel la résine thermoplastique est un polyamide, une polyéther éther cétone, une polysulfone, une polyéther sulfone, un éther de polyphénylène, un polycarbonate, un téréphtalate de polyalkylène, une polyoléfine, un ABS, un fluorure de polyvinylidène, un polytétrafluoroéthylène ou un copolymère de tétrafluoroéthylène.

9. Article tubulaire extrudé en thioéther de polyarylène selon l'une quelconque des revendications 1 à 8, dans lequel l'article tubulaire extrudé est mis sous la forme d'un cône ou d'une bride à une extrémité, ou aux deux extrémités, de celui-ci.

10.procédé pour produire un article tubulaire extrudé en thioéther de polyarylène, qui comporte la fusion d'une composition comportant de 30 à 100% en poids d'une résine de thioéther de polyarylène ayant une structure essentiellement linéaire, avec une viscosité à l' état fondu de 2000 à 40000 $10^{-1}$ Pa.s, déterminée à une température de 310°C et un taux de cisaillement de 200 $sec^{-1}$, de 0 à 70% en poids d'une charge minérale et de 0 à 40% en poids d'une résine thermoplastique, l' extrusion de la composition fondue sous forme d'un tube, par une filière ayant une ouverture en forme d'anneau, le fait de soumettre l'extrudat à une étape de fixation, puis la reprise et le découpage du produit.

11. Procédé pour produire un article tubulaire extrudé en thioéther de polyarylène selon la revendication 10, dans lequel l'étape de fixation est une étape qui consiste à refroidir et à solidifier le produit tubulaire fondu extrudé à travers la filière ayant une ouverture en forme d'anneau en faisant passer ledit produit à travers un dispositif de fixation tout en pressant le produit contre la surface de la paroi interne de celui-ci, sous une pression interne qui lui est appliquée.

12. Procédé pour produire un article tubulaire extrudé en thioéther de polyarylène selon la revendication 10, dans lequel l'étape de fixation est une étape qui consiste à refroidir et à solidifier le produit tubulaire fondu extrudé à travers la filiaire ayant une ouverture en forme d'anneau, le long de l'extérieur d'un mandrin intérieur relié à la filière.

13. Procédé pour produire un article tubulaire extrudé en thioéther de polyarylène selon la revendication 10, dans lequel l'étape de fixation est une étape qui consiste à refroidir et à solidifier le produit tubulaire fondu extrudé à travers la filiaire ayant une ouverture en forme d'anneau, à travers une série de 2, ou plus, plaques de fixation munies de trous circulaires tels que les trous des plaques de fixation diminuent progressivement en diamètre dans la direction où l'on fait passer le tube extrudé.

14. Procédé pour produire un article tubulaire extrudé en thioéther de polyarylène selon la revendication 10, dans lequel l'étape de fixation est une étape qui consiste à refroidir et à solidifier le produit tubulaire fondu extrudé à travers la filière ayant une ouverture en forme d'anneau, tout en le pressant contre la surface interne d'un dispositif de fixation sous vide, avec une aspiration due au vide.

15. Procédé pour produire un article tubulaire extrudé en thioéther de polyarylène selon la revendication 10, dans lequel la teneur en ladite résine thermoplastique est essentiellement 0.

16. Procédé pour produire un article tubulaire extrudé en thioéther de polyarylène selon la revendication

10, dans lequel la teneur en ladite résine thermoplastique est esentiellement 0 et la teneur en ladite charge minérale est essentiellement 0.

17. Article tubulaire extrudé en thioéther de polyarylène selon l'une quelconque des revendications 1 à 9, qui a une résilience Izod (sans entailles) selon ASTM D-256 d'au moins 15 kg·cm/cm.

18. Article tubulaire extrudé en thioéther de polyarylène selon la revendication 17, qui a une résilience Izod (sans entaille) selon ASTM D-256 d'au moins 30 kg·cm/cm